# EUROPÄISCHE PATENTSCHRIFT

(11) **EP 1 404 488 B1**
(45) Veröffentlichungstag und Bekanntmachung des Hinweises auf die Patenterteilung: **27.06.2007**
(21) Anmeldenummer: 02748604.2
(22) Anmeldetag: 22.06.2002
(51) Int. Cl.: B24B 55/05, B24B 23/02, B25F 5/02, B27B 9/04

(54) **SCHUTZVORRICHTUNG FÜR EINE HANDWERKZEUGMASCHINE**
PROTECTIVE DEVICE FOR A HAND MACHINE TOOL
DISPOSITIF DE PROTECTION POUR MACHINE-OUTIL MANUELLE

(30) Priorität: 29.06.2001 DE 10131266
(43) Veröffentlichungstag der Anmeldung: 07.04.2004
(73) Patentinhaber: ROBERT BOSCH GMBH, 70442 Stuttgart (DE)
(72) Erfinder: WENDT, Dieter, 73732 Esslingen (DE); VOIGT, Mike, 74405 Gaildorf (DE); KLEIDER, Albert, 74523 Schwaebisch Hall (DE); SCHADOW, Joachim, 72135 Dettenhausen (DE); NEEF, Kurt, 74405 Gaildorf (DE); MUELLER-BOYSEN, Ulrich, 73732 Esslingen (DE)
(86) Internationale Anmeldenummer: PCT/DE2002/002301
(87) Internationale Veröffentlichungsnummer: WO 2003/004217

(56) Entgegenhaltungen:
- WO-A-95/08422
- WO-A-99/42263
- DE-A- 3 635 159
- DE-U- 8 803 627
- DE-U- 20 100 307
- US-A- 4 022 182

## Beschreibung

### Stand der Technik

Die Erfindung geht aus von einer Schutzvorrichtung für eine Handwerkzeugmaschine, insbesondere für eine Schleifhandwerkzeugmaschine, nach dem Oberbegriff des Anspruchs 1.

Es sind Schutzvorrichtungen für Handwerkzeugmaschinen, insbesondere für Winkelschleifer, bekannt, deren Schutzhauben zwar einen gewissen Schutz bei Schleifarbeiten bieten, die jedoch keine ausreichende Staubabsaugung unterstützen. Dies liegt daran, dass das Werkzeug und insbesondere eine Schleifscheibe der Handwerkzeugmaschine während des Betriebs und auch in Ruhestellung seitlich nur teilweise durch die Schutzhaube abgedeckt ist. Daher ist eine Schleifstaubabsaugung wenig effektiv, trotz der üblicherweise verwendeten kräftigen externen Staubsauger.

Gemäß US 4 022 182 (Oberbegriff des Anspruchs 1) ist eine Tauchkreissäge mit schwenkbar gegenüber dem drehenden Werkzeug angeordneter Schutzhaube bekannt, in deren Seitenwand ein Staubabführrohr mündet, durch das die Staubabsaugung erfolgt. Dabei wird die Staubabfuhr durch den Ort der Mündung und den Winkel des Staubabführrohrs begünstigt. Es sind keine Maßnahmen vorgesehen, durch die die Staubabfuhr beschleunigt und ein Verstopfen des Staubabführrohres verhindert wird.

### Vorteile der Erfindung

Die Erfindung betrifft eine Schutzvorrichtung für eine Handwerkzeugmaschine, insbesondere für eine Schleifhandwerkzeugmaschine, mit den Merkmalen des Patentanspruchs 1, Bevorzugte Ausgestaltungen sind in den abhangigen Anspruchen angegeben.

Mit einer solchen Schutzvorrichtung wird erreicht, dass ein Werkzeug einer Handwerkzeugmaschine, insbesondere einer Schleifhandwerkzeugmaschine, vollständig oder in einem vorbestimmten Umfang von der Schutzhaube umgriffen werden kann und dies unabhängig von der Werkzeugposition relativ zu einem Werkstück. Hierdurch ist ein Bediener weitgehend vor Partikeln, die durch das Werkzeug von einem Werkstück abgetragen werden, insbesondere vor Schleifstaub, geschützt. Außerdem wird erreicht, dass ein Schleifstaubabtransport besonders effektiv bewerkstelligt werden kann und in den meisten Fällen weder ein interner Ventilator noch ein externer Staubsauger zum Staubabtransport notwendig ist. Durch die relativ zur Befestigungsvorrichtung bewegliche Lagerung der Schutzhaube ist die Schutzhaube auch relativ zur Werkzeugposition beweglich gelagert. Hierdurch kann die Schutzhaube während des Betriebs der Handwerkzeugmaschine immer auf dem Werkstück aufliegen, unabhängig davon, wie weit das Werkzeug in das Werkstück eingreift. Das mit der Schutzhaube verdrehsicher verbundene Führungsmittel führt dabei die Schutzhaube entlang des Werkstücks, wodurch gewährleistet ist, dass die Schutzhaube während des Betriebs am Werkstück anliegt, ohne relativ zum Führungsmittel verkippen zu können. Die Schutzhaube kann somit unabhängig von der Eingreiftiefe des Werkzeugs in das Werkstück in einer relativ zur Werkstückoberfläche konstanten Position gehalten werden. Ein Entweichen von Partikeln zwischen Schutzhaube und Werkstückoberfläche kann somit wirksam vermieden werden.

Die Erfindung ist besonders vorteilhaft bei einer Schutzhaube für einen Winkelschleifer anwendbar, da ein Winkelschleifer mobil und in verschiedenen Positionen, zum Beispiel über Kopf, verwendet wird. Dabei gewährt ein vollständiges Umgreifen oder ein Umgreifen des Werkzeugs durch die Schutzhaube in einem vorbestimmten Umfang dem Bediener weitgehenden Schutz vor Schleifstaub.

Die Schutzhaube umgreift das Werkzeug in wesentlichen Bereichen und insbesondere zumindest teilweise in radialer Richtung. Bei einem scheibenförmigen, drehenden Werkzeug wird hierbei zumindest ein Kreisbogensegment der Peripherie des Werkzeugs in radialer Richtung vollständig umgriffen. Vom Werkzeug weggeschleuderte Partikel des bearbeiteten Werkstücks, wie beispielsweise Schleifstaub, werden somit von der Schutzhaube in dem Bereich, in dem sie das Werkzeug in radialer Richtung umgreift, aufgefangen. Zweckmäßigerweise umgreift die Schutzhaube mindestens 120°, insbesondere mindestens 180° der Peripherie des Werkzeugs, um möglichst viel Staub aufzufangen.

In vorteilhafter Ausgestaltung der Erfindung weist das Führungsmittel mindestens eine Kufe auf. Auf einer Kufe, die sich zweckmäßigerweise in Bearbeitungsrichtung des Werkzeugs erstreckt, kann die Schutzhaube sicher auf dem Werkstück geführt werden. Bei einer Ausgestaltung der Kufe mit einer ebenen Auflagefläche oder Auflagekante wird die Schutzhaube besonders sicher über ein ebenes Werkstück geführt. Durch die Minimierung des Führungsmittels auf eine Gleitkufe, die fest an der Schutzhaube sitzt, ist die Schutzhaube besonders leicht und gewichtsparend herstellbar.

Eine besonders einfache bewegliche Lagerung der Schutzhaube relativ zur Befestigungsvorrichtung wird durch eine schwenkbare Lagerung der Schutzhaube relativ zur Befestigungsvorrichtung erreicht. Hierbei können beide Elemente in einem Drehpunkt miteinander verbunden sein.

Ein besonders guter Schleifstaubabtransport kann erreicht werden, wenn die Schutzhaube dazu vorgesehen ist, in einem auf einem ebenen Werkstück in Betriebsstellung aufliegenden Zustand das Werkzeug in Verbindung mit dem Werkstück in einem von der Eindringtiefe des Werkzeugs in das Werkstück unabhängigen Umfang zu umschließen. Hierbei kann das Werkstück vollständig oder in einem vorbestimmten Umfang umschlossen sein, sodass beispielsweise durch ein Herausziehen des Werkzeugs aus dem Werkstück kein Staub oder nicht mehr Staub aus der Schutzhaube in die Umgebung austritt.

Zweckmäßigerweise verbleibt in der Schutzhaube oder zwischen Schutzhaube und Werkstück eine Lufteinlassöffnung, deren Größe unabhängig von der Eindringtiefe des Werkzeugs in das Werkstück ist. Auf diese Weise ist ein konstanter, von der Eindringtiefe des Werkzeugs in das Werkstück unabhängiger Luftstrom von der Lufteinlassöffnung zu einem Staubabsaugrohr und somit eine konstante Staubabsaugung möglich.

In bevorzugter Ausgestaltung der Erfindung weist die Schutzvorrichtung einen Federmechanismus auf, der die Schutzhaube im Betrieb gegen ein Werkstück drückt. Die Schutzhaube liegt somit über dem Führungsmittel auf dem Werkstück auf, sodass kein ungewollter Schlitz zwischen Schutzhaube und Werkstück entsteht, durch den Staub aus der Schutzhaube ausgetragen wird.

Eine Schutzvorrichtung, deren Schutzhaube das Werkzeug in Ruhestellung in axialer Richtung vollständig umschließt, gewährt eine hohe Arbeitssicherheit: Ein Bediener ist vor Verletzungen durch das Werkzeug wirksam geschützt. Dies gilt auch für eine Schutzvorrichtung, bei der sich das Werkzeug beim Austreten aus dem Werkstück vollständig in die Schutzhaube zurückzieht. Außerdem gewährt eine solche Schutzvorrichtung einen guten Schutz gegen den Austritt von Schleifstaub oder Partikeln. Der mit dem Werkzeug rotierende Staub wird mit dem sich in die Schutzhaube zurückziehenden Werkzeug in die Schutzhaube gezogen.

Vorteilhafterweise umfasst die Schutzhaube zwei gegeneinander bewegliche Einheiten, die in einem gegenseitigen Zusammenspiel eine Betriebsstellung und eine Werkzeugwechselstellung aufweisen, wobei zumindest eine der Einheiten in der Werkzeugwechselstellung das Werkzeug in axialer Richtung in einem für einen Werkzeugwechsel ausreichenden Maße freigibt. Bei einer solchen Ausgestaltung der Schutzhaube ist trotz eines in Ruhestellung weitgehend umschlossenen Werkzeugs ein einfacher Werkzeugwechsel möglich. Eine hierfür besonders einfache Konstruktion wird erreicht, indem die beiden Einheiten unabhängig voneinander um einen gemeinsamen Drehpunkt relativ zur Befestigungsvorrichtung schwenkbar sind. Die beiden Einheiten sind beispielsweise mit einer Niete oder Schraube mit der Befestigungsvorrichtung verbunden. Eine der Einheiten ist beispielsweise ein Drehdeckel. Die Anordnung des Drehdeckels zum Abdecken der Axialseite der Schleifscheibe verbessert die Arbeitssicherheit mit dem Handwerkzeug und verhindert seitlichen Schleifstaubaustritt, wobei ein schneller Werkzeugwechsel durch Verschwenken des Drehdeckels um einen Drehpunkt möglich ist. Durch die formschlüssige Verriegelung des Drehdeckels mit überrastenden Nocken und Federzungen ist der Drehdeckel besonders sicher verschließbar und einfach zu öffnen.

Ein weiterer Vorteil wird dadurch erreicht, dass die Schutzhaube ein Fenster aufweist, das einem Bediener eine Sicht auf das Werkzeug und insbesondere auf die einem Werkstück zugewandte Seite des Werkzeugs gewährt. Es ist damit eine besonders einfache und gute Kontrolle der Werkzeugposition im Werkstück möglich.

Zweckmäßigerweise weist die Schutzhaube einen Sehschlitz auf. Er kann beispielsweise durch eine Aussparung in der Schutzhaube oder durch eine Abschrägung eines Teils der Schutzhaube gebildet sein. Der auf die Schmalseite der Schleifscheibe gerichtete Sehschlitz sichert eine besser kontrollierte Handhabung des Winkelschleifers mit Schutzhaube vor allem zum zielgenauen Eingriff der Schleifscheibe in Mörtelfugen. Die Sichtkontrolle des Werkzeugs ist durch das Fenster in Verbindung mit einem Sehschlitz besonders gut. Als Sehschlitz kann die Lufteinlassöffnung Verwendung finden. Die durch den Sehschlitz angesaugte Luft bewirkt Turbulenzen, die das Fenster im Wesentlichen staubfrei halten. Bei einem Abtransport des Staubs auf der entgegengesetzten Seite des Fensters, z.B. durch ein dort angeordnetes Staubabführrohr, bleibt das Fenster durch die Luftturbulenzen im Wesentlichen staubfrei.

Durch ein Drosselblech innerhalb der Schutzhaube wird der Ausblaseffekt des Schleifstaubs weiter verbessert, da dort die durch die rotierende Schleifscheibe verwirbelte Luft gestaut wird und der Luftstrom am Staubabführrohr herausgeleitet wird. Das Drosselblech kann an der dem Staubabsaugrohr entgegengesetzten Seite angeordnet und beispielsweise an die Schutzhaube angeformt sein.

Durch einen formschlüssig verrastenden Tiefenanschlag ist eine besonders schnelle Schnitttiefenvorwahl durch Drücken, Verschieben und Loslassen der Drucktaste möglich und eine vorgewählte Einstellung ist nicht ungewollt verstellbar.

### Zeichnung

Weitere Vorteile ergeben sich aus der folgenden Zeichnungsbeschreibung. In der Zeichnung ist ein Ausführungsbeispiel der Erfindung dargestellt.

Es zeigen:
- Fig. 1: eine Handwerkzeugmaschine mit einer erfindungsgemäßen Schutzvorrichtung in Arbeitsposition als Draufsicht,
- Fig. 2: die Handwerkzeugmaschine aus Fig. 1 von oben,
- Fig. 3: die Handwerkzeugmaschine aus Fig. 1 von der Gegenseite,
- Fig. 4: die Ansicht gemäß Fig. 3 um 90° um die senkrechte Achse gedreht,
- Fig. 5: die Ansicht gemäß Fig. 1 in Ruheposition,
- Fig. 6: die Ansicht gemäß Fig. 5 von der gegenüberliegenden Seite,
- Fig. 7: die Seitenansicht eines weiteren Ausführungsbeispiels einer Handwerkzeugmaschine mit einer erfindungsgemäßen Schutzvorrichtung in Ruheposition,
- Fig. 8: die Ansicht gemäß Fig. 7 von der gegenüberliegenden Seite,
- Fig. 9: die Ansicht gemäß Fig. 8 um 90° um die Längsachse gedreht,
- Fig. 10: die Ansicht gemäß Fig. 7 in Arbeitsposition,
- Fig. 11: ein Detail des Staubabsaugrohrs gemäß Fig. 7 und 10,
- Fig. 12: eine räumliche Darstellung gemäß Fig. 1,
- Fig. 13: eine räumliche Unteransicht gemäß Fig. 1 und 2,
- Fig. 14: eine Ansicht des verstellbaren Anschlags zur Schnitttiefenbegrenzung,
- Fig. 15: ein Detail des Schnitttiefenanschlags,
- Fig. 16: einen Ausschnitt des Drehdeckels,
- Fig. 17: eine Unteransicht der Winkelschleiferschutzhaube gemäß Fig. 1,
- Fig. 18: eine Seitenschale der Schutzhaube von außen betrachtet,
- Fig. 19: die Gehäuseschale gemäß Fig. 18 von innen gesehen und
- Fig. 20: eine räumliche Darstellung des vorderen Bereichs der Schleifmaschine mit quer zum Schleifwerkzeug abstehendem Staubabführrohr.

### Beschreibung der Ausführungsbeispiele

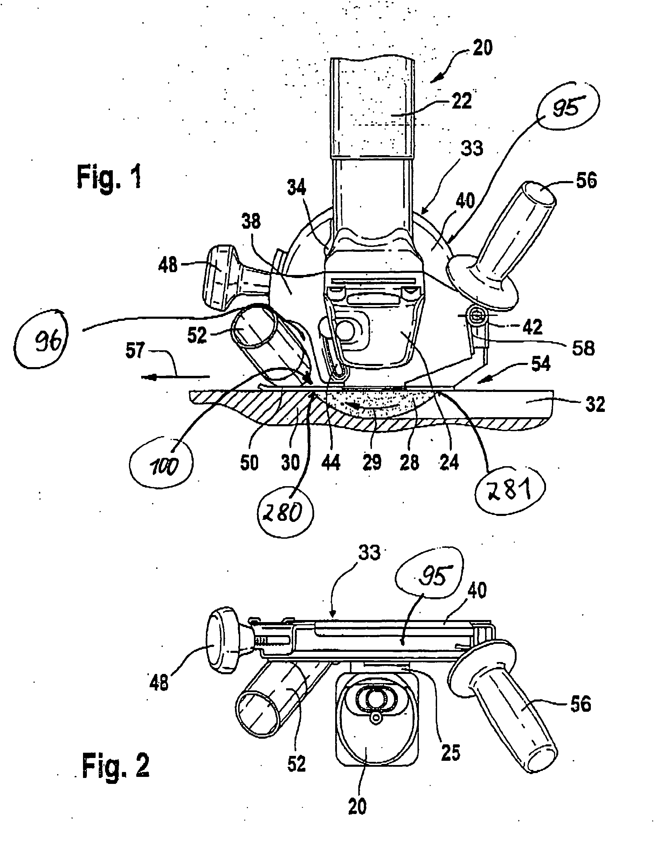

Figur 1 zeigt die Seitenansicht eines Winkelschleifers 20, dessen Motorgehäuse 22 sich im Wesentlichen senkrecht nach oben erstreckt und einen nicht dargestellten Motor enthält.

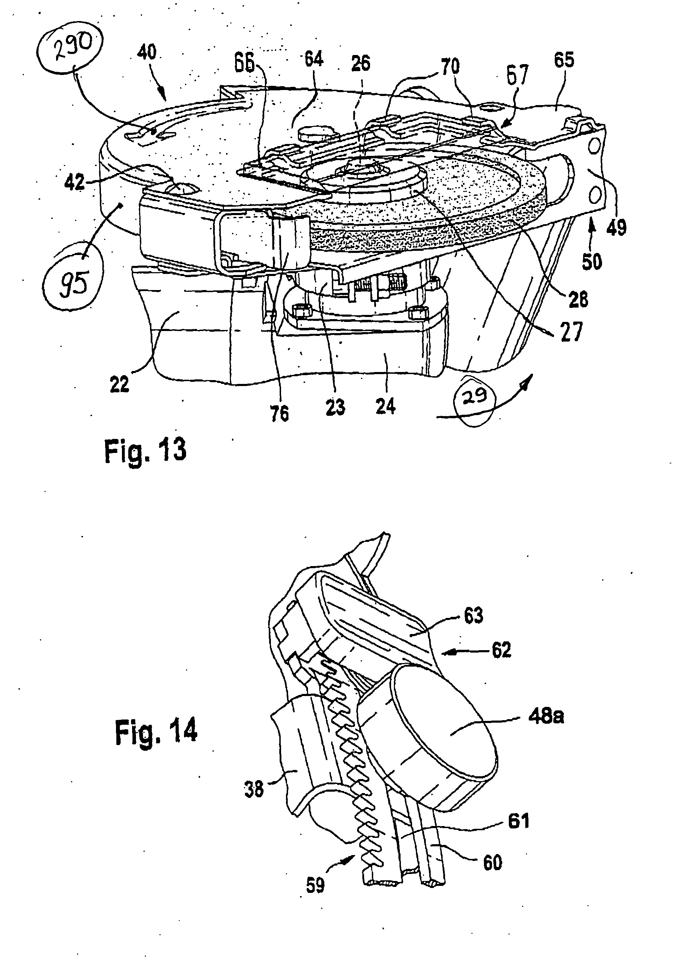

In Betrachtungsrichtung senkrecht nach unten schließt sich an das Motorgehäuse 22 ein Getriebegehäuse 24 an, dessen Abtriebswelle 26 (Fig. 13) senkrecht zur Zeichenebene verläuft und an ihrem freien Ende ein Werkzeug trägt. Das Werkzeug ist eine Schleifscheibe 28. Diese dreht sich in Drehrichtung 29 im Uhrzeigersinn und taucht in ein Werkstück 30, in das sie von rechts kommend eine Nut 32 nachschleift.

Auf der in Betrachtungsrichtung linken Seite trägt das Motorgehäuse 22 eine Schiebetaste 34 eines Ein- und Ausschalters.

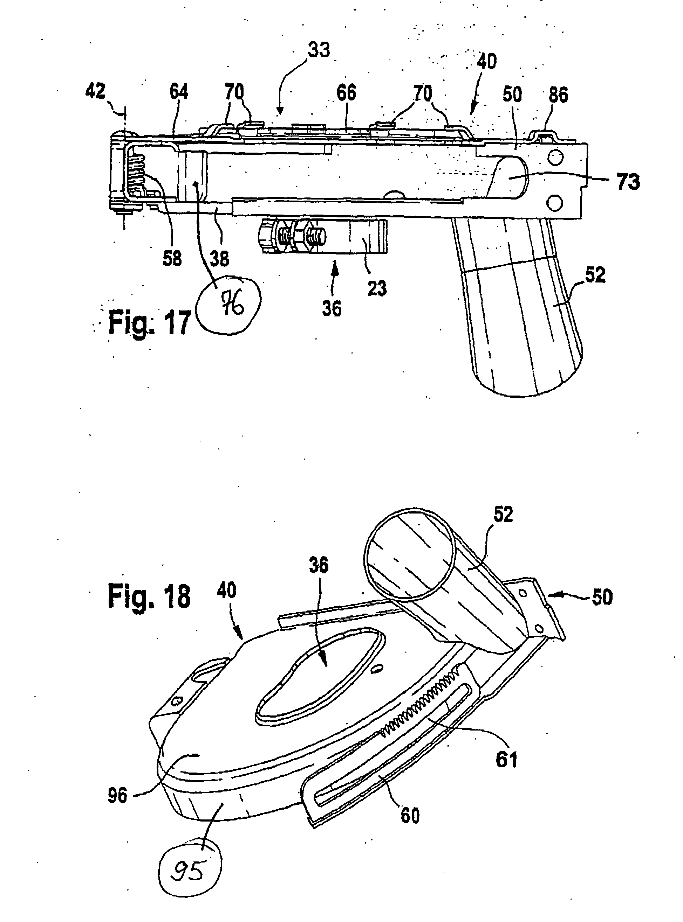

Am Winkelschleifer 20 ist eine Schutzvorrichtung 33 befestigt. Sie umfasst eine Befestigungsvorrichtung und eine Schutzhaube 40. Die Befestigungsvorrichtung ist als ein Schwenkarm 38 ausgestaltet. Der Schwenkarm 38 ist mit einer passenden Aufnahmeöffnung 36 (Fig. 18) mit einer zylindrisch ausgestalteten, axialen Verlängerung des Getriebegehäuses 24, dem Hals 25, befestigt. Der Schwenkarm 38 wiederum ist an der Schutzhaube 40 befestigt und ist relativ zur Schutzhaube 40 um einen Drehpunkt 42 auf- und abschwenkbar. Hierbei werden Schwenkarm 38 und Schutzhaube 40 durch einen in einem Führungsschlitz 44 des Schwenkarms 38 an der Schutzhaube 40 sitzenden Führungsbolzen 46 sicher gegeneinander geführt. Der Schwenkarm 38 trägt in Betrachtungsrichtung links einen Knauf 48, an dem der Winkelschleifer 20 mit der Schutzhaube 40 auf einem Werkstück 30 führbar ist. Der Knauf 48 wird außerdem zum Einstellen der Schnitttiefe von Hand ergriffen, wobei der Schwenkarm 38 auf- und abverstellbar ist. Auf dem Werkstück 30 sitzt die Schutzhaube 40 mit einem auf ihrer Unterseite befindlichen Führungsmittel, einem kufenartigen Schlitten 50 auf. Das Führungsmittel sorgt für senkrechtes Ausrichten der Schutzhaube 40 gegenüber der Werkstückoberfläche.

In Betrachtungsrichtung links unten trägt die Schutzhaube 40 unmittelbar angrenzend an den Schlitten 50 ein Staubabführrohr 52. Durch dieses hindurch wird beim Schleifen anfallender Staub abtransportiert, z.B. über ein eingeschobenes Schlauchstück und eine daran angeschlossene Staubabsaugvorrichtung. Das Staubabführrohr 52 ist in einem Winkel von 45° zur Rotationsachse der Schleifscheibe 28 angeordnet.

In Betrachtungsrichtung rechts unten ist die Schutzhaube 40 schräg nach oben abgewinkelt, sodass eine Sichtöffnung 54 gebildet wird, durch die der Bediener der Maschine den Eingriff der Schleifscheibe 28 in das Werkstück 30 bzw. die Nut 32 kontrollieren kann. In Betrachtungsrichtung rechts oben ragt schräg von der Schutzhaube 40 ein Handgriff 56 weg, an dem die Einheit aus Winkelschleifer 20 und Schutzhaube 40 bequem entlang dem Werkstück 30 führbar ist.

Zwischen dem Schwenkarm 38 und der Schutzhaube 40 ist am Drehpunkt 42 ein Federmechanismus angeordnet. Der Federmechanismus umfasst eine vorgespannte Schenkelfeder 58, die den Schwenkarm 38 nach oben zu drücken sucht. Dadurch muss der Winkelschleifer 20 gegenüber der Schutzhaube 40 gemäß Figur 1 entgegen dem Uhrzeigersinn gegen die Federkraft der Schenkelfeder 58 verschwenkt werden, um in seine Arbeitsposition zu gelangen, in der die Schleifscheibe 28 unten aus dem Durchtrittsschlitz 73 (Figur 17) bzw. dem Schlitten 50 heraustritt, um in das Werkstück 30 eindringen zu können.

Wird der Winkelschleifer 20 mit der Schutzhaube 40 vom Werkstück 30 abgehoben, zieht die Schenkelfeder 58 die Schutzhaube 40 gegenüber dem Schwenkarm 38 nach unten, sodass die Schleifscheibe 28 vollständig innerhalb der Schutzhaube 40 verschwindet.

Die übliche Arbeitsweise mit dem Winkelschleifer 20 ist in Vorschubrichtung 57 gerichtet, sodass im Verhältnis zur Drehrichtung 29 der Schleifscheibe 28 eine Gegenlaufbewegung von Werkstück 30 und Drehrichtung 29 vorliegt.

Die in Figur 2 gezeigte Ansicht von oben zeigt die schräge Anordnung des Handgriffs 56 an der Schutzhaube 40 und den schrägen Verlauf des Staubabführrohrs 52. Darüber hinaus ist der Hals 25 des Getriebegehäuses 24 erkennbar, der in die Aufnahmeöffnung 36 des Schwenkarms 38 eingreift.

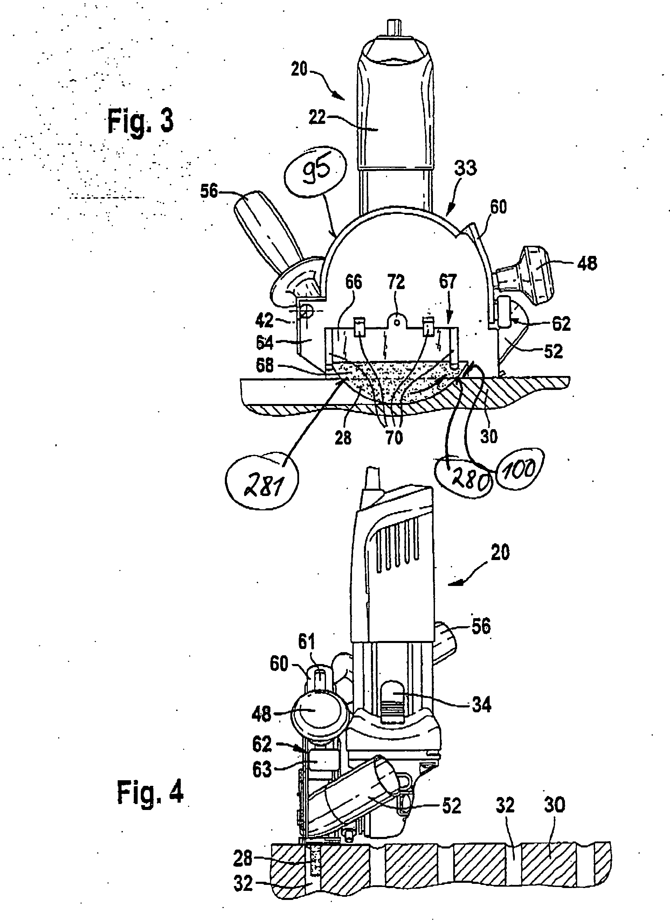

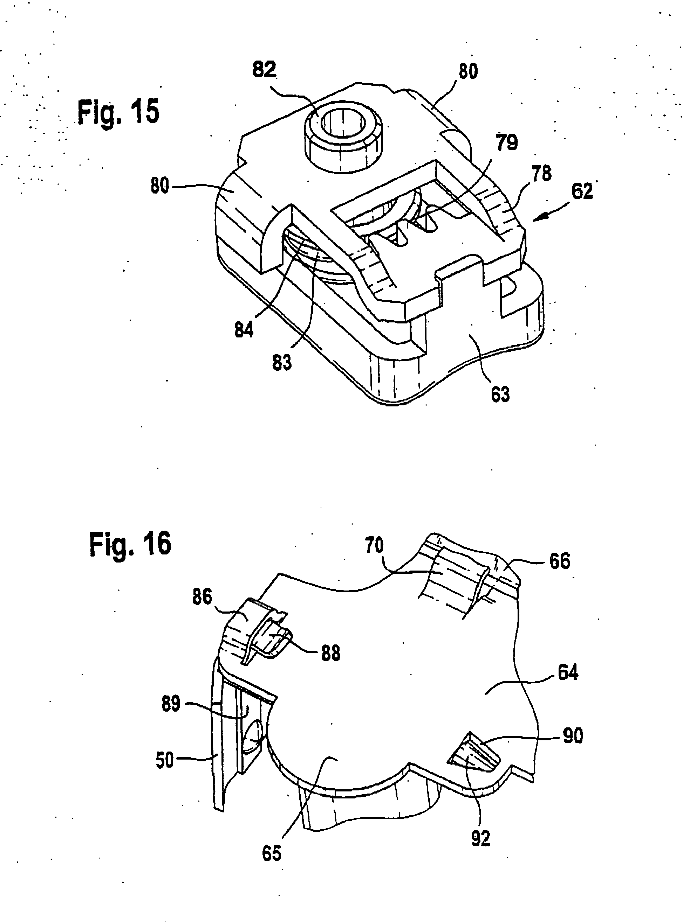

Figur 3 zeigt den Winkelschleifer 20 mit Schutzhaube 40 gemäß Figur 1 von der gegenüberliegenden Seite ebenfalls in Arbeitsposition mit weit nach unten austretender Schleifscheibe 28. Erkennbar ist in Figur 3 ein Führungslineal 60, an dem der Knauf 48 geführt ist und durch Drehen um seine Längsachse feststellbar ist. Weiter ist unterhalb des Knaufs 48 ein Schnitttiefenanschlag 62 sichtbar, der ebenfalls im Führungslineal 60 verschiebbar ist und durch Tastendruck in vorgewählten, gestuften Positionen formschlüssig arretierbar ist. Der Schnitttiefenanschlag 62 ist unverlierbar am Führungslineal 60 befestigt (Figuren 14, 15).

Die Schutzvorrichtung 33 umfasst zwei gegeneinander bewegliche Einheiten, nämlich die Schutzhaube 40 und einen Drehdeckel 64. Der Drehdeckel 64 ist auf der gegenüberliegenden Seite des Schwenkarms 38 angeordnet und ist zur Abdeckung der Schleifscheibe 28 vorgesehen. Der Drehdeckel 64 ist gemeinsam mit der Schutzhaube 40 um den Drehpunkt 42 schwenkbar. Für einen Wechsel der Schleifscheibe 28 wird der Drehdeckel 64 von der Betriebsstellung in Betrachtungsrichtung nach oben und links in eine Werkzeugwechselstellung geschwenkt. In dieser nach außen geschwenkten Werkzeugwechselstellung ist das freie Ende der Abtriebswelle 26 bzw. die Befestigungsmutter 27 (Figur 13) gut zugänglich, sodass nach Lösen der Befestigungsmutter 27 die Schleifscheibe 28 in axialer Richtung aus der Zeichenebene heraus entnommen werden kann.

Der Drehdeckel 64 trägt in seinem unteren Bereich in einer viereckigen Ausnehmung ein Fenster 66. Zwischen dem Fenster 66 und dem Schlitten 50 befindet sich eine seitliche Lufteinlassöffnung 68, durch die hindurch Luft eintreten kann, die die von der rotierenden Schleifscheibe 28 ausgeblasene Luft zum Abtransport von Schleifstaub ersetzt. Die Lufteinlassöffnung 68 ist relativ zur Schleifscheibe 28 gegenüber dem Staubabführrohr 52 angeordnet. In einem auf dem ebenen Werkstück 30 in Betriebsstellung aufliegenden Zustand weist die Lufteinlassöffnung 68 eine von der Eindringtiefe der Schleifscheibe 28 in das Werkstück 30 unabhängige Größe auf, da der Schlitten 50, der zusammen mit der Schutzhaube 40 die Lufteinlassöffnung 68 begrenzt, unabhängig von der Eindringtiefe der Schleifscheibe 28 in das Werkstück 30 immer flach auf dem Werkstück 30 aufliegt.

Das Fenster 66 ist in am Drehdeckel 64 befestigte Rahmensegmente 70 eingeschoben und mit einer überstehenden Rastzunge 72 unverlierbar mit dem Drehdeckel 64 verrastet.

Figur 4 zeigt eine um 90° gedrehte Seitenansicht des Winkelschleifers 20 gemäß Figur 3, wobei gegenüber den vorhergehenden Figuren die Ausgestaltung des Führungslineals 60 mit einem zentralen Schlitz 61 - zur vertikalen Schwenkführung des Knaufs 48 bzw. zum Verschwenken des Schnitttiefenanschlags 62 mit dessen Drucktaste 63 - sichtbar ist. Deutlich ist auch der Eingriff der Schleifscheibe 28 in die Nut 32, die als Mörtelfuge ausgebildet, ist sichtbar. Die übrigen zuvor erläuterten Einzelheiten sind per Bezugszeichen bezeichnet aber nicht nochmals erwähnt.

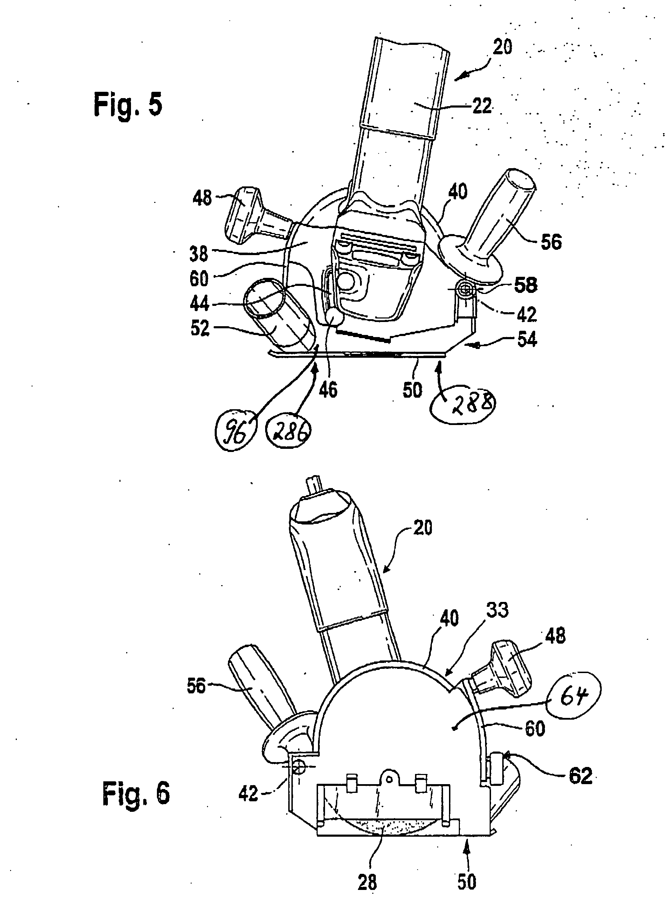

Figur 5 zeigt den Winkelschleifer 20 gemäß Figur 1 mit der Schutzhaube 40 in Ruheposition, in der die Schleifscheibe 28 innerhalb der Schutzhaube 40 verschwunden ist, weil der Schwenkarm 38 gegenüber der Schutzhaube 40 nach oben verschwenkt ist. Dies wird beim Vergleich der Relativlage des Führungsbolzens 46 zum Führungsschlitz 44 gemäß Figur 5 im Vergleich zu Figur 1 besonders deutlich.

Figur 6 zeigt, wie die Schleifscheibe 28 hinter dem Schlitten 50 sitzend innerhalb der Kontur der Schutzhaube 40 angeordnet ist.

In den Figuren 5 und 6 ist die Ruheposition der Schutzhaube 40 daran erkennbar, dass der Knauf 48 in Betrachtungsrichtung am oberen Anschlag des Führungslineals 60 sitzt.

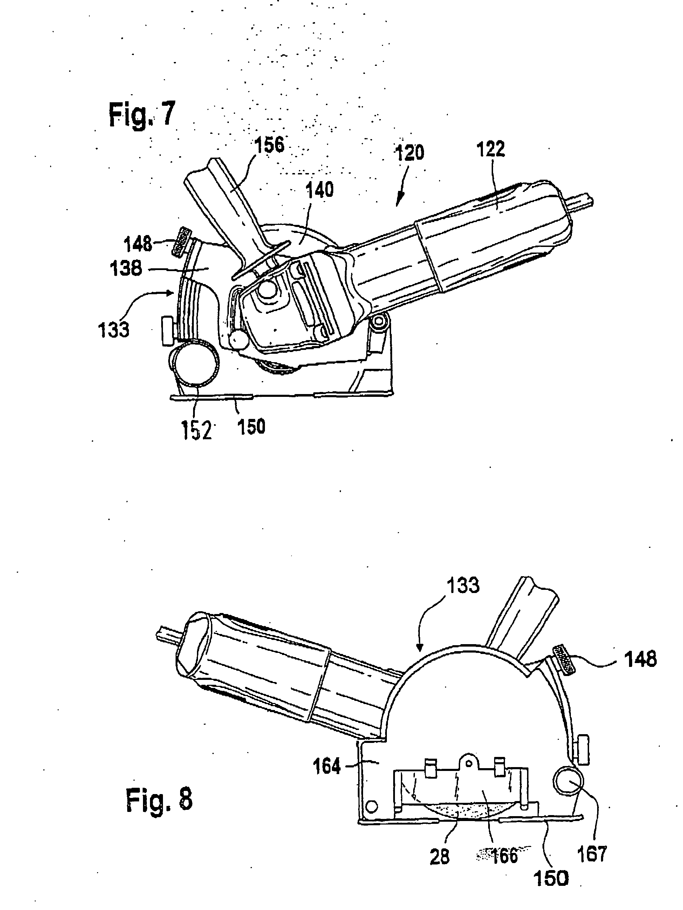

Die Figuren 7 und 8 zeigen ein gegenüber dem der Figuren 1 bis 6 geringfügig geändertes Ausführungsbeispiel, mit einer Schutzvorrichtung 133, bei der ein rechtwinklig von der Schutzhaube 140 wegstehendes Staubabführrohr 152 vorgesehen ist, das zur Absaugung mittels gesondertem Staubsauger vorgesehen ist. Darüber hinaus ist ein länglicher, stielartiger Handgriff 156 unmittelbar am Winkelschleifer 120 angebracht, um eine Zweihandbedienung des Winkelschleifers 120 zu ermöglichen, wobei eine Hand am Handgriff 156 und die andere Hand am Motorgehäuse 122 angreifen kann. Darüber hinaus ist der Schwenkarm 138 statt mit einem Knauf mit einer Rändelmutter 148 versehen, mit der die vorgewählte Schnitttiefe einstellbar ist.

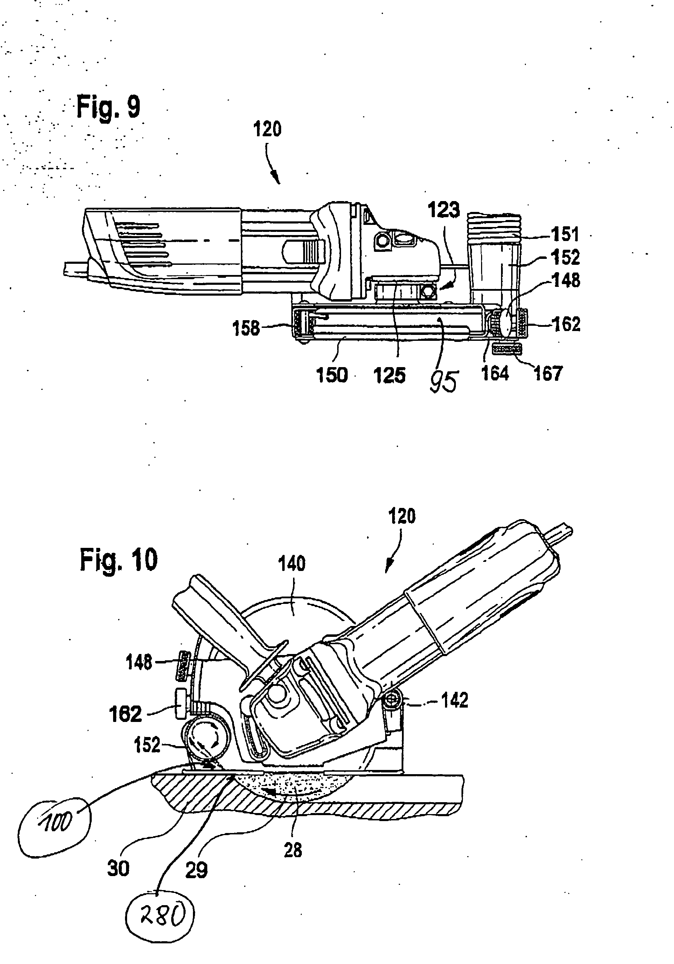

Auf ihrer Unterseite trägt die Schutzhaube 140 einen Schlitten 150 zum Führen auf einem in Figur 10 dargestellten Werkstück 30.

Figur 8 zeigt die Ansicht gemäß Figur 7 von der gegenüberliegenden Seite, wobei im Unterschied zu Figur 3 des ersten Ausführungsbeispiels das Fenster 166 mittels einer Rändelmutter befestigbar ist.

Die Figuren 7 und 8 zeigen den Winkelschleifer 120 mit der Schutzhaube 140 in Ruheposition, d.h. mit in die Schutzhaube 140 eingezogener Schleifscheibe 28, während die Figuren 9 und 10 den gleichen Winkelschleifer 120 in Arbeitsposition, d.h. mit unter dem Schlitten 150 heraustretender Schleifscheibe 28 zeigen.

Figur 9 zeigt deutlich eine Spannschelle 123, die einen Kragen der Schutzhaube 140 fest am Hals 125 des Winkelschleifers 120 festklemmt. Die Schutzhaube 140 ist durch Lösen einer Sechskantschraube und durch ein Öffnen der Spannschelle 123 vom Hals 125 des Winkelschleifers 120 leicht zu lösen, wenn zuvor die Schleifscheibe 28 entfernt wurde. Weiter sind die Rändelmutter 167 zum Festhalten des Drehdeckels 164 an der Schutzhaube 140, die Rändelmutter 148 zum Einstellen und Lösen der vorgewählten Schnitttiefe sowie der mittels Rändelmutter 162 einstellbare Schnitttiefenanschlag sichtbar.

Figur 9 zeigt deutlich die Schenkelfeder 158, mit der der Winkelschleifer 120 gegenüber der Schutzhaube 140 um den Drehpunkt 142 selbstständig in Ruhestellung verschwenkt wird. Darüber hinaus ist ein Absaugschlauch 151 zum Anschluss an einen Staubsauger erkennbar, mit dem der Schleifstaub gut abtransportierbar ist.

Figur 10 zeigt den Winkelschleifer 120 in Arbeitsstellung, wobei in Drehrichtung 29 der Schleifscheibe 28 tangential von der Austrittsstelle der Schleifscheibe 28 aus dem Werkstück 30 Schleifstaub an die Innenwand des Staubabführrohrs 152 geschleudert wird und von dort über den Absaugschlauch 151 leicht absaugbar ist.

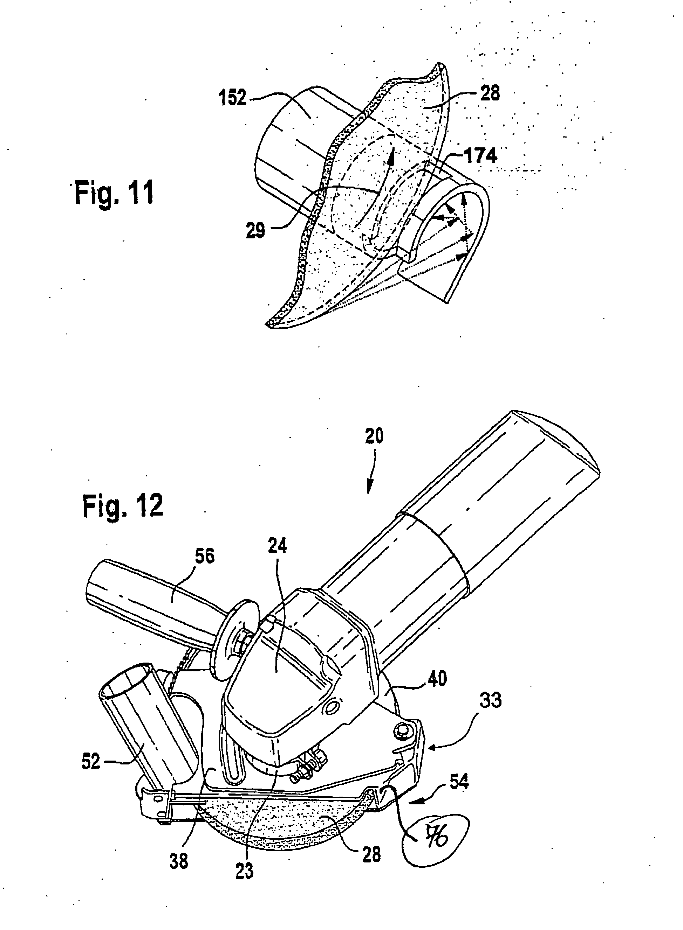

Figur 11 zeigt die Einzelheit des Staubabführrohrs 152 in seiner Lage bezüglich der Schleifscheibe 28. Darin ist zu erkennen, dass der radial äußerste Bereich der Schleifscheibe 28 in eine Ausnehmung 174 des Staubabführrohrs 152 ragt. Ein Teil des Staubabführrohrs 152 durchdringt somit die ins Unendliche fortgesetzt gedachten Ebenen der beiden flachen Seiten der Schleifscheibe 28. Die Ausnehmung 174 ist so gestaltet, dass ein Teil des Staubabführrohrs 152 die Schleifscheibe 28 hintergreift. Die Ausnehmung 174 ist somit schlitzförmig geformt.

Der von der Schleifscheibe 28 erzeugte Förderluftstrom gelangt gemeinsam mit Staubpartikeln entsprechend den Pfeilen auf die gekrümmte Fläche des Teils des Staubabführrohrs 152, der durchdringt die Ebenen der beiden flachen Seiten der Schleifscheibe 28 durchdringt. Auf diese Prallfläche mit hoher Geschwindigkeit auftreffend wird der Förderluftstrom mit dem Schleifstaub derart in das Staubabführrohr 152 weitergeleitet, dass er im Staubabführrohr 152 eine zyklonartige Wirbelbewegung vollführt. Der solcherart in Rotationsbewegung versetzte Förderluft- und Staubstrom weist genügend kinetische Energie auf, um aus eigener Kraft das Staubabführrohr 152 an dessen dem Winkelschleifer 20 abgewandten Seite verlassen können. Es kann jedoch sicherheitshalber ein Staubsauger nachgeschaltet werden, um in besonderen Arbeitspositionen des Winkelschleifers 120 ein Verstopfen des Staubabführrohrs 152 zu verhindern.

Figur 12 zeigt eine Seitenansicht eines weiteren Ausführungsbeispiels, dessen Ausgestaltung im Wesentlichen mit dem Winkelschleifer 20 aus den Figuren 1 bis 4 übereinstimmt. Lediglich der stielartige Handgriff 56 ist unmittelbar am Getriebegehäuse 24 des Winkelschleifers 20 angeschraubt, und es fehlt der Knauf. Besonders gut ist die Spannschelle 23 mit der Spannschraube zu erkennen, die den Winkelschleifer 20 gegenüber der Schutzhaube 40 festhalten.

Figur 13 zeigt eine räumliche Draufsicht etwa parallel zur Schleifscheibe 28 von der Unterseite der Schutzhaube 40 her. Besonders deutlich ist die Ausgestaltung des Schlittens 50 mit einer Gleitkufe 49 sichtbar. Der Schlitten 50 im Austrittsbereich der Schutzhaube 40 angeordnet, in dem die Schleifscheibe während des Betriebs teilweise aus der Schutzhaube 40 austritt. Die Gleitkufe 49 des Schlittens 50 verengt den Querschnitt des Austrittsbereichs der Schutzhaube 40. Hierdurch wird der Luftstrom in der Schutzhaube 40 zum Staubabsaugrohr 52 hin begünstigt.

In Betrachtungsrichtung links ist benachbart zur Schleifscheibe 28 ein Drosselblech 76 angeordnet, das radial bis sehr nah an die Peripherie der Schleifscheibe 28 reicht und einen durch die rotierende Schleifscheibe 28 beim Schleifen bewirkte Luftbewegung drosselt. Hierdurch entsteht im Inneren der Schutzhaube 40 ein gewisser Überdruck, der durch das Staubabführrohr 52 hindurch bläst und anfallenden Schleifstaub mitnimmt.

Erkennbar ist die Spannschelle 23 mit der Spannmutter zum Befestigen der Schutzhaube 40 am Getriebegehäuse 24. Oben ist die Schutzhaube 40 waagerecht mit dem aus Blech bestehenden Drehdeckel 64 abgedeckt, der in Betrachtungsrichtung rechts einen runden, hervorstehenden Schwenkgriff 65 zur Betätigung mit dem Daumen trägt.

In Betrachtungsrichtung links trägt der Drehdeckel 64 einen eingeprägten Drehrichtungspfeil, der in Betrachtungsrichtung nach links weist. Dies ist die vorgesehene Drehrichtung zum Hochschwenken des Drehdeckels 64 in seine Löseposition zum Lösen der Schleifscheibe 28. Außerdem zeigt der Pfeil zugleich die Drehrichtung der Schleifscheibe 28 an. Der Drehdeckel 64 ist um den Drehpunkt 42 um etwa 180° nach links zu verschwenken, damit die Schleifscheibe 28 freiliegt und nach Lösen der Befestigungsmutter 27 ausgewechselt werden kann.

Deutlich erkennbar sind auch die Rahmensegmente 70 zur Aufnahme des Fensters 66 in der entsprechenden Ausnehmung.

Figur 14 zeigt das Führungslineal 60 als festen Teil der Schutzhaube 40, gegenüber der der Schwenkarm 38 schwenkverstellbar ist. Die Position des Schwenkarms 38 relativ zum Führungslineal 60 ist mit der Rändelschraube 48a bzw. in Figur 1 bis 4 mit dem Knauf 48 durch Drehen um ihre Achse feststellbar bzw. lösbar.

Die Drucktaste 63 des Schnitttiefenanschlags 62 ist gegenüber der zahnstangenartigen Außenkontur 59 durch ein spiegelbildliches Profil verrastbar und federnd durch Tastendruck auf die Drucktaste 63 außer Eingriff bringbar. Ist die Drucktaste 63 entlastet, rastet sie selbsttätig in der jeweiligen Position mit ihrem Gegenprofil 79 in die zahnstangenartige Außenkontur 59 ein. Der Schnitttiefenanschlag 62 ist entlang des Führungslineals 60 an beliebiger Stelle festlegbar, sodass der Schwenkarm 38 mit seiner Rändelschraube 48a nur noch bis an diesen heranschwenkbar ist. Damit ist eine reproduzierbare Schnitttiefe festgelegt.

Figur 15 zeigt die Einzelheit des Schnitttiefenanschlags 62 mit seiner Drucktaste 63 und einem Profilträger 78 aus Blech, der das Gegenprofil 79 zum Eingriff in die zahnstangenartige Außenkontur 59 des Führungslineals 60 bildet. Der Profilträger 78 trägt auf gegenüberliegenden Seiten je eine Lasche 80, die zum geführten Eingriff in den zentralen Schlitz 61 des Führungslineals 60 passt. Der Profilträger 78 wird quer von einem Führungsbolzen 82 durchtreten, entlang dessen er zur Drucktaste 63 hin und von dieser weg verschiebbar ist. Die Drucktaste 63 ist durch eine Spiralfeder 83 elastisch vorgespannt.

Die Drucktaste 63 und der Profilträger 78 sind fest gegeneinander verspannt, wobei zwischen diesen beiden im montierten Zustand das Führungslineal 60 entlang läuft. Dabei kommt die Spiralfeder 83 mit einer Stützscheibe 84 zur Anlage oben auf das Führungslineal 60, und bei Betätigung der Drucktaste 63 verschiebt sich diese axial gefedert gegenüber dem Führungslineal 60, sodass dabei der Profilträger 78 mit seinem Gegenprofil 79 aus der Außenkontur 59 des Führungslineals 60 austreten kann.

Figur 16 zeigt einen Ausschnitt einer räumlichen Draufsicht auf den Schwenkgriff 65 des Drehdeckels 64. Dieser ist durch ein Stück des Drehdeckels 64 gebildet. In Betrachtungsrichtung links weist der Drehdeckel 64 eine nach oben herausgebogene Lasche 86 auf, durch die eine Federzunge 88 einer L-förmigen Blattfeder 89 hindurchtritt, die mit dem Schlitten 50 flächig verbunden ist, in diesem Fall genietet.

In Betrachtungsrichtung oben ist eines der Rahmensegmente 70 erkennbar, in die das Fenster 66 einschiebbar ist.

In Betrachtungsrichtung rechts ist eine Ausnehmung 90 des Drehdeckels 64 erkennbar, die überrastend einen Rastnocken 92 übergreift, der aus der benachbarten Seitenwand der Schutzhaube 40 herausgeprägt ist. Durch Schwenken des Drehdeckels 64 mittels des Schwenkgriffs 65 in Betrachtungsrichtung nach rechts kann die Lasche 86 über die Federzunge 88 gleiten und die Ausnehmung 90 den Rastnocken 92 überwinden, sodass anschließend mit geringem Kraftaufwand der Drehdeckel 64 um den Drehpunkt 42 (Figur 13) verschwenkt werden kann.

Figur 17 zeigt eine Unteransicht der Schutzhaube 40 mit der Draufsicht auf den kufenartigen Schlitten 50. Dessen Fläche bildet einen Durchtrittsschlitz 73 zum Aus- und Eintritt der nicht gezeigten Schleifscheibe 28.

In Betrachtungsrichtung nach unten ist die Spannschelle 23 mit der Durchtrittsöffnung 36 zur Aufnahme des Halses 25 des Winkelschleifers 20 (Figur 1) angeordnet. In Betrachtungsrichtung links außen ist die Schenkelfeder 58 erkennbar, die den Schwenkarm 38 um den Drehpunkt 42 zu schwenken sucht, während das Staubabführrohr 52 in Betrachtungsrichtung nach rechts unten ragt. Das Staubabführrohr 52 verjüngt sich zu seiner der Schleifscheibe 28 weisenden Mündung hin. Hierdurch wird erreicht, dass der von der Schleifscheibe 28 erzeugte Förderluftstrom in Axialrichtung des Staubabführrohrs 52 schnell durch die Engstelle an der Mündung des Staubabführrohrs 52 strömt. Er verlässt den Innenraum der Schutzhaube 40 somit mit großer Geschwindigkeit, wobei er die bei Figur 11 beschriebene Rotationsbewegung ausführt. Durch die Aufweitung des Staubabführrohrs 52 in Richtung von der Schutzhaube 40 weg entwickelt der Luftstrom aufgrund seiner Rotation eine Saugwirkung, die den Austritt der Luft aus der Schutzhaube in das Staubabführrohr 52 begünstigt.

Oben ist die Schutzhaube 40 mit dem Drehdeckel 64 abgedeckt, dessen Rahmensegmente 70 nach oben ragen und das Fenster 66 halten. Außerdem ist oben rechts auf dem Drehdeckel 64 die Lasche 86 sichtbar.

Figur 18 zeigt Einzelheiten des feststehenden, schalenartigen Seitenteils 96 der Schutzhaube 40, das in Betrachtungsrichtung rechts das angeschweißte Führungslineal 60 trägt.

Oben rechts ist der kufenartige Bereich des Schlittens 50 und das Staubabführrohr 52 erkennbar. Hier ist besonders deutlich die Anordnung des Saugrohrs in der äußersten Ecke der Schutzhaube 40, am Entstehungsort des Schleifstaubs beim Benutzen des Winkelschleifers 20 erkennbar, durch das hindurch sich anfallender Schleifstaub durch die von der Schleifscheibe 28 erteilte hohe Eigengeschwindigkeit in Verbindung mit dem durch die Schleifscheibe 28 erzeugten Blasluftstrom selbst hindurch bewegt.

Etwa mittig trägt das Seitenteil 96 die Durchtrittsöffnung 36, durch die der Hals 25 des Winkelschleifers 20 hindurchragt. Die Durchtrittsöffnung 36 ist ein Langloch, die das Auf- und Abschwenken des Winkelschleifers 20 bzw. des Halses 25 gegenüber der Schutzhaube 40 erlaubt bis zum Erreichen der maximalen Schnitttiefe.

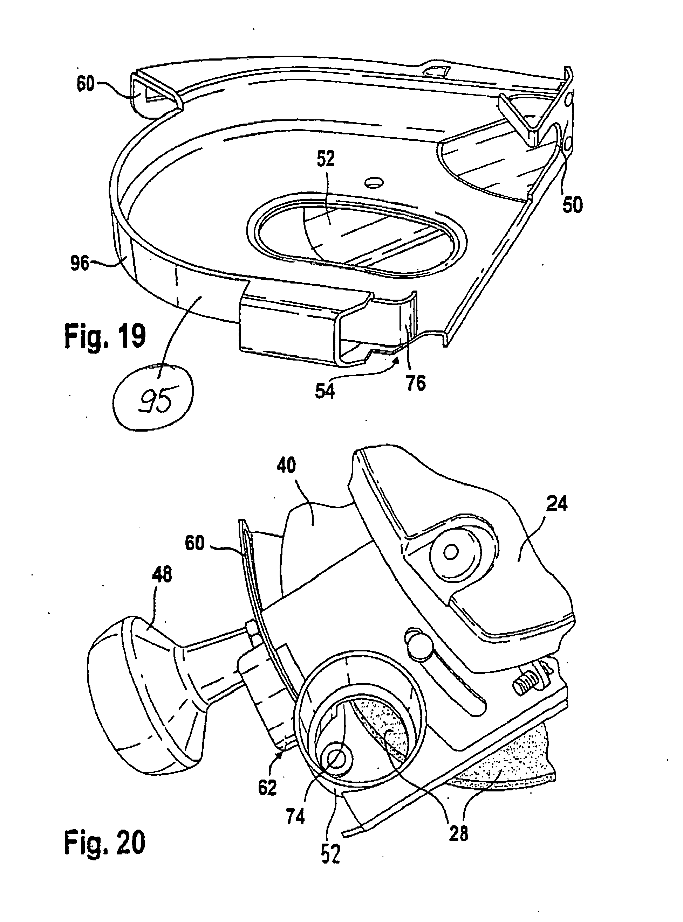

Figur 19 zeigt das Seitenteil 96 von der Innenseite aus betrachtet, wobei der Schlitten 50, das Staubabführrohr 52 und das Führungslineal 60 besonders deutlich erkennbar sind. Darüber hinaus ist an der äußersten Seite des Seitenteils 96 das Drosselblech 76 und die Sichtöffnung 54 erkennbar.

Figur 20 zeigt eine Seitenansicht der Schutzhaube 40 ausschnittsweise im Bereich des Getriebegehäuses 24 des Winkelschleifers 20. Deutlich erkennbar ist hier auch der Knauf 48 zum Führen der Schutzhaube 40 bzw. zum Einstellen einer vorgewählten Schnitttiefe und der Schnitttiefenanschlag 62. Weiter ist das Staubabführrohr 52 erkennbar, in dessen Umfangskontur durch die Ausnehmung 74 die Schleifscheibe 28 mit ihrem radial äußeren Bereich hindurchtritt.

### Bezugszeichen

- 20: Winkelschleifer
- 22: Motorgehäuse
- 23: Spannschelle
- 24: Getriebegehäuse
- 25: Hals
- 26: Antriebswelle
- 27: Befestigungsmutter
- 28: Schleifscheibe
- 29: Drehrichtung
- 30: Werkstück
- 32: Nut
- 33: Schutzvorrichtung
- 34: Schiebetaste
- 36: Aufnahmeöffnung
- 38: Schwenkarm
- 40: Schutzhaube
- 42: Drehpunkt
- 44: Führungsschlitz
- 46: Führungsbolzen
- 48: Knauf
- 48a: Rändelschraube
- 49: Gleitkufe
- 50: Schlitten
- 52: Staubabführrohr
- 54: Sichtöffnung
- 56: Handgriff
- 57: Vorschubrichtung
- 58: Schenkelfeder
- 59: Außenkontur
- 60: Führungslineal
- 61: Schlitz
- 62: Schnitttiefenanschlag
- 63: Drucktaste
- 64: Drehdeckel
- 65: Schwenkgriff
- 66: Fenster
- 68: Lufteinlassöffnung
- 70: Rahmensegment
- 72: Rastzunge
- 73: Durchtrittsschlitz
- 74: Ausnehmung
- 76: Drosselblech
- 78: Profilträger
- 79: Gegenprofil
- 80: Lasche
- 82: Führungsbolzen
- 83: Spiralfeder
- 84: Stützscheibe
- 86: Lasche
- 88: Federzunge
- 89: Blattfeder
- 90: Ausnehmung
- 92: Rastnocken
- 96: Seitenteil
- 120: Winkelschleifer
- 122: Motorgehäuse
- 123: Spannschelle
- 125: Hals
- 133: Schutzvorrichtung
- 138: Schwenkarm
- 140: Schutzhaube
- 142: Drehpunkt
- 148: Rändelmutter
- 150: Schlitten
- 152: Staubabführrohr
- 156: Handgriff
- 158: Schenkelfeder
- 162: Rändelmutter
- 164: Drehdeckel
- 166: Fenster
- 167: Rändelmutter
- 174: Ausnehmung

## Patentansprüche

1. Schutzvorrichtung (33) für eine Handwerkzeugmaschine (20), insbesondere für eine Schleifhandwerkzeugmaschine, mit einer Schutzhaube (40), die dazu vorgesehen ist, ein drehendes Werkzeug, insbesondere Schleifscheibe (28), zumindest teilweise in radialer Richtung und seitlich zu umgreifen, so dass an der Schutzhaube (40) ein Werkzeugdreheintritt (286) und ein Werkzeugdrehaustritt (288) definiert ist, sowie mit einem Führungsmittel (49, 50) zur Führung der Schutzhaube (40) entlang eines Werkstücks (30) und weiter mit einer Befestigungsvorrichtung (38) zur beweglichen, insbesondere schwenkbaren, Befestigung der Schutzhaube (40) an der Handwerkzeugmaschine (20) sowie mit einem seitlich von einem Seitenteil (96) der Schutzhaube (40) abstehenden Staubabführrohr (52), wobei das Führungsmittel (49, 50) auf der Seite des Werkzeugdreheintritts (286) der Schutzhaube (40) angeordnet ist, wo der aufwärts drehende Bereich des Werkzeugs (28) beim Schleifen Späne aus dem Werkstück (30) nach oben mitnimmt und dort einen Werkzeugdrehaustritt (280) bildet, dass die Schutzhaube (40) das Staubabführrohr (52) am äußeren Rand des Seitenteils (96) nahe dem Führungsmittel (49,50) trägt, wo das Staubabführrohr (52) das Seitenteil (96) durchtritt und darin mündet, und wobei das Führungsmittel (49, 50) verdrehsicher mit der Schutzhaube (40) verbunden ist, **dadurch gekennzeichnet, dass** ein ins Innere der Schutzhaube (40) ragender Teil des Staubabführrohrs (52) dort so ausgebildet ist, dass er das Werkzeug (28) umgreift, indem das Staubabführrohr (52) mit seinem das Seitenteil (96) durchtretenden, insbesondere längs geteilt, rohrartigen, Teil den Rand des Werkzeugs (28) mit einer am inneren Ende eingearbeiteten schlitzartigen Ausnehmung (174) umgreift.

2. Schutzvorrichtung nach Anspruch 1, **dadurch gekennzeichnet, dass** die Innenwand des Staubabführrohres (152) die Schleifscheibe (28) hintergreift und mit der Ausnehmung (174) von beiden Seiten umgreift.

3. Schutzvorrichtung nach Anspruch 1 oder 2, **dadurch gekennzeichnet, dass** sich das Staubabführohr (52) zur Schutzhaube (33) hin konisch, verjüngt, so dass der Luftstrom im Staubabführrohr (52) in eine zyklonartige Wirbelbewegung gerät.

4. Schutzvorrichtung nach Anspruch 1, **dadurch gekennzeichnet, dass** zwischen der Peripherie der Schleifscheibe (28) und radialer Schutzhaubenwand (95) in Drehrichtung der Schleifscheibe (28) nach der Mündung des Staubabführrohres (52), insbesondere am Werkzeugeintritt (280) ein Drosselblech (76) angeordnet ist.

5. Schutzvorrichtung nach Anspruch 4, **dadurch gekennzeichnet, dass** das Drosselblech (76) aus einer Verlängerung der radialen Wand (95) des Seitenteils (96) gebildet ist, insbesondere einstückig mit der Wand (95) und zur Schleifscheibe (28) hin gebogen ist.

6. Schutzvorrichtung nach Anspruch 1, **dadurch gekennzeichnet, dass** auf der dem Führungsmittel (49, 50) fernen Unterseite der Schutzhaube (40) eine Lufteinlassöffnung (54) als unverschlossene Sichtöffnung auf die Schleifscheibe (28) angeordnet ist, insbesondere als Schrägabschnitt am unteren Rand eines als Seitenwand dienenden Drehdeckels (64), vorzugsweise unterhalb des Handgriffs (56).

7. Schutzvorrichtung nach Anspruch 6, **dadurch gekennzeichnet, dass** die Lufteinlassöffnung (54) in Gestalt eines offenen Sehschlitzes (68) im unteren Rand eines seitlichen Drehdeckels (64) der Schutzhaube (40), insbesondere in Verlängerung eines durch Glas abgedeckten, Fensters (66) angeordnet ist, so dass durch das Fenster (66) einfallendes Licht, bei Staubbelag auch Restlicht, eine visuelle Kontrolle des Randes der Schleifscheibe (28) durch den Sehschlitz (68) hindurch sichert.

8. Schutzvorrichtung nach einem der vorhergehenden Ansprüche, **dadurch gekennzeichnet, dass** die Größe der Lufteinlassöffnung (68) - in Betriebsstellung der Schutzhaube (40) auf einem ebenen Werkstück (30) - unabhängig von der Eindringtiefe des Werkzeugs (28) in das Werkstück (30) ist.

9. Schutzvorrichtung nach Anspruch 1, **dadurch gekennzeichnet, dass** das Führungsmittel (50) mindestens eine die Schleifscheibe (28) mit einem Schlitz (73) beidseitig enger als die Schutzhaube (40) umgreifende, insbesondere als Schlitten (50) zum Abstützen der Handwerkzeugmaschine (20) auf einem Werkstück ausgestaltete, Gleitkufe (49) hat, deren Schlitz (73), insbesondere gemeinsam mit dem gegenüberliegenden Drosselblech (76), zur weiteren Drosselung der Luftströmung dient.

10. Schutzvorrichtung nach Anspruch 1, **dadurch gekennzeichnet, dass** die Schutzhaube (40) aus zwei zueinander beweglichen Teilen besteht, von denen sich einer in Gestalt eines seitlichen Drehdeckels (64) vollflächig über die gesamte Stirnseite des Seitenteils (96) der Schutzhaube (40) bzw. der Schleifscheibe (28) erstreckt, die vom Drehdeckel (64) bei dessen Verschwenken i.w. vollständig freigegeben werden.

11. Schutzvorrichtung nach Anspruch 10, **dadurch gekennzeichnet, dass** der Drehdeckel (64) in seiner Ebene schwenkbar angeordnet ist und einen handbetätigbaren Schwenkgriff (65) hat.

12. Schutzvorrichtung nach Anspruch 11, **dadurch gekennzeichnet, dass** der Drehdeckel (64) Mittel zum Verriegeln von dessen Schließposition gegenüber dem Seitenteil (96) hat.

13. Schutzvorrichtung nach Anspruch 12, **dadurch gekennzeichnet, dass** der Drehdeckel (64) das Fenster (66) sowie den Schlitz (68) trägt.

14. Schutzvorrichtung nach Anspruch 1, **dadurch gekennzeichnet, dass** die Schutzhaube (40) auf ihrer radialen Wand (95) einen Schnitttiefenanschlag (62) trägt, der mit Drucktaste (63) gegenüber einem Führungslineal (60) verstellbar arretierbar ist und an dem ein die Handwerkzeugmaschine (20) tragender Schwenkarm (38, 138) der Schutzvorrichtung (33) anschlagbar ist.

15. Schutzvorrichtung nach Anspruch 14, **dadurch gekennzeichnet, dass** der Schnitttiefenanschlag (62) ein seitliches gezahntes Gegenprofil (79) zum Eingriff in eine passend gezahnte Außenkontur (59) eines Führungslineals (60) zum Festlegen unterschiedlicher Anschlagpositionen hat.

16. Schutzvorrichtung nach Anspruch 15, **dadurch gekennzeichnet, dass** eine, insbesondere mittels Schnittiefenanschlag (62), gewählte Schnitttiefenposition mittels eines als Führungshandgriff dienenden Knaufs (48) drehend feststellbar ist.

## Claims

1. Protective device (33) for a hand-guided machine tool (20), in particular of a hand-guided grinding machine tool, having a safety guard (40) which is provided in order to engage around a rotating tool, in particular grinding wheel (28), at least partially in the radial direction and laterally, so that a tool rotation inlet (286) and a tool rotation outlet (288) is defined on the safety guard (40), and having a guide means (49, 50) for guiding the safety guard (40) along a tool (30), and further having a fastening device (38) for fastening the safety guard (40) in a moveable manner, in particular pivotable manner, on the hand-guided machine tool (20), and additionally having a dust-extraction tube (52) projecting laterally from a side part (96) of the safety guard (40), it being the case that the guide means (49, 50) is arranged on the side of the tool rotation inlet (286) of the safety guard (40) where the upwardly rotating region of the tool (28) entrains chips from the workpiece (30) in the upward direction during grinding and forms a tool rotation outlet (280) there, that the safety guard (40) bears the dust-extraction tube (52) on the outer border of the side part (96), in the vicinity of the guide means (49, 50), where the dust-extraction tube (52) passes through the side part (96) and opens out therein, and that the guide means (49, 50) is connected in a rotationally fixed manner to the safety guard (40), **characterized in that** part of the dust-extraction tube (52) which projects into the interior of the safety guard (40) is designed there such that it engages around the tool (28) in such a way that its in particular longitudinally split tubular part which passes through the side part (96) engages around the border of the tool (28) by way of a slot-like aperture (174) made at the inner end.

2. Protective device according to Claim 1, **characterized in that** the inner wall of the dust-extraction tube (152) engages behind the grinding wheel (28) and engages around it from both sides by way of the aperture (174).

3. Protective device according to Claim 1 or 2, **characterized in that** the dust-extraction tube (52) tapers conically in the direction of the safety guard (40), so that the airstream in the dust-extraction tube (52) is caused to execute a cyclone-like vortexing movement.

4. Protective device according to Claim 1, **characterized in that** a restrictor plate (76) is arranged between the periphery of the grinding wheel (28) and radial safety-guard wall (95) downstream of the mouth opening of the dust-extraction tube (52), as seen in the direction of rotation of the grinding wheel (28), in particular at the tool inlet (280).

5. Protective device according to Claim 4, **characterized in that** the restrictor plate (76) is formed from an extension of the radial wall (95) of the side part (96), in particular integrally with the wall (95), and is curved in the direction of the grinding wheel (28).

6. Protective device according to Claim 1, **characterized in that** on the underside of the safety guard (40), this underside being remote from the guide means (49, 50), an air-inlet opening (54) is arranged as an unobstructed opening for viewing the grinding wheel (28), in particular as an oblique portion on the bottom border of a rotary cover (64) serving as side wall, preferably beneath the handle (56).

7. Protective device according to Claim 6, **characterized in that** the air-inlet opening (54) is arranged in the form of an open viewing slot (68) in the bottom border of a lateral rotary cover (64) of the safety guard (40), in particular in extension of a glass-covered window (66), so that light passing through the window (66), and also residual light in the case of a covering with dust, ensures visual monitoring of the border of the grinding wheel (28) through the viewing slot (68).

8. Protective device according to one of the preceding claims, **characterized in that** the size of the air-inlet opening (68) - with the safety guard (40) in the operating position on a planar workpiece (30) - is independent of the depth to which the tool (28) penetrates into the workpiece (30).

9. Protective device according to Claim 1, **characterized in that** the guide means (50) has at least one sliding skid (49) which engages around the grinding wheel (28) on both sides, by way of a slot (73), to a narrower extent than the safety guard (40), is configured in particular as a slide (50) for supporting the hand-guided machine (20) on a workpiece and of which the slot (73), in particular together with the restrictor plate (76) located opposite, serves for further restricting the air flow.

10. Protective device according to Claim 1, **characterized in that** the safety guard (40) comprises two parts which can be moved in relation to one another and of which one extends, in the form of a lateral rotary cover (64), with its entire surface area over the entire end side of the side part (96) of the safety guard (40) and of the grinding wheel (28), these being essentially fully released from the rotary cover (64) when the latter pivots.

11. Protective device according to Claim 10, **characterized in that** the rotary cover (64) is arranged in a pivotable manner along its plane and has a manually actuable pivoting grip (65).

12. Protective device according to Claim 11, **characterized in that** the rotary cover (64) has means for locking its closed position in relation to the side part (96).

13. Protective device according to Claim 12, **characterized in that** the rotary cover (64) contains the window (66) and the slot (68).

14. Protective device according to Claim 1, **characterized in that** the safety guard (40), on its radial wall (95), bears a cutting-depth stop (62) which can be arrested such that it can be adjusted by a pushbutton (63) in relation to a guide rule (60) and against which a pivoting arm (38, 138) of the protective device (33), the pivoting arm bearing the hand-guided machine tool (20), can strike.

15. Protective device according to Claim 14, **characterized in that** the cutting-depth stop (62) has a lateral toothed mating profile (79) for engaging in an appropriately toothed outer contour (59) of a guide rule (60) for defining different stop positions.

16. Protective device according to Claim 15, **characterized in that** a cutting-depth position selected, in particular, by means of the cutting-depth stop (62) can be secured with rotary action by means of a knob (48) serving as a guide handle.

## Revendications

1. Dispositif de protection (33) pour une machine portative (20), en particulier pour une meuleuse, comprenant :
- un capot de protection (40) entourant un outil tournant, notamment une meule (28), au moins partiellement en direction radiale et latéralement, de sorte que le capot de protection (40) définit une entrée et une sortie (288) d'outil tournant (286),
- un moyen de guidage (49, 50) pour guider le capot de protection (40) le long d'une pièce (30),
- un dispositif de fixation (38) pour fixer, avec possibilité de déplacement, notamment de basculement, le capot de protection (40) sur la machine portative (20),
- une tubulure d'évacuation de poussière (52) faisant saillie sur une partie latérale (96) du capot de protection (40), et
- le moyen de guidage (49, 50) est disposé sur le côté de l'entrée d'outil tournant (286) du capot de protection (40), là où la zone tournant vers l'amont de l'outil (28), quand des copeaux sortent de la pièce, entraîne ceux-ci vers le haut en formant à cet endroit une sortie d'outil tournant (288),
- le capot de protection (40) porte la tubulure d'évacuation de poussière (52) sur le bord externe de la partie latérale (96) situé près du moyen de guidage (49, 50), là où cette tubulure (52) traverse la partie latérale (96) pour déboucher,
- le moyen de guidage (49, 50) est relié avec sécurité en rotation au capot de protection (40),
**caractérisé en ce qu'**
une partie de la tubulure d'évacuation de poussière (52), en saillie vers l'intérieur du capot de protection (40), est constituée en cet endroit de manière à entourer l'outil (28), et cette tubulure, avec sa partie traversant la partie latérale (96) en étant notamment divisée en longueur, entoure le bord de l'outil (28) par un évidement (174) en forme de fente, réalisé sur l'extrémité interne.

2. Dispositif de protection selon la revendication 1,
**caractérisé en ce que**
la paroi interne de la tubulure d'évacuation de poussière (152) est en prise par derrière avec la meule (28) et par l'évidement (174) l'enveloppe des deux côtés.

3. Dispositif de protection selon la revendication 1 ou 2,
**caractérisé en ce que**
la tubulure d'évacuation de poussière (52) va s'amincissant en cône en direction du capot de protection (33), de sorte que le courant d'air présente un mouvement tourbillonnant du genre cyclone dans cette tubulure (52).

4. Dispositif de protection selon la revendication 1,
**caractérisé en ce qu'**
une tôle d'étranglement (76) est disposée entre la périphérie de la meule (28) et la paroi radiale (95) du capot de protection, après l'embouchure de la tubulure (52) par rapport au sens de rotation de la meule (28), en particulier sur l'entrée d'outil (286).

5. Dispositif de protection selon la revendication 4,
**caractérisé en ce que**
la tôle d'étranglement (76) est constituée par un prolongement de la paroi radiale (95) de la partie latérale (96), elle est notamment monobloc avec cette paroi (95) en étant recourbée en direction de la meule (28).

6. Dispositif de protection selon la revendication 1,
**caractérisé en ce que**
sur la face inférieure du capot de protection (40) éloignée du moyen de guidage (49, 50), se trouve une ouverture d'entrée d'air (54) sous la forme d'une ouverture non fermée de vision de la meule (28), notamment sous la forme d'une section oblique le long du bord inférieur d'un capot tournant (64) servant de paroi latérale, de préférence en dessous de la poignée (56).

7. Dispositif de protection selon la revendication 6,
**caractérisé en ce que**
l'ouverture d'entrée d'air (54), sous la forme d'une fente de vision ouverte (68) est disposée sur le bord inférieur d'un couvercle latéral tournant (64) du capot de protection (40), notamment dans le prolongement d'une fenêtre (66) fermée par une vitre, de sorte que la lumière entrant par la fenêtre (66) même en cas de lumière résiduelle par dépôt de poussière garantit un contrôle visuel du bord de la meule (28) à travers la fente (68).

8. Dispositif de protection selon une des revendications précédentes,
**caractérisé en ce que**
la grandeur de l'ouverture d'entrée d'air (68), quand le capot de protection (40) est en position de fonctionnement sur une pièce plane (30) est indépendante de la profondeur de pénétration de l'outil (28) dans la pièce (30).

9. Dispositif de protection selon la revendication 1,
**caractérisé en ce que**
le moyen de guidage (50) possède au moins un patin de glissement présentant une fente (73) et qui entoure la meule (28) des deux côtés plus étroitement que le capot (40), notamment sous la forme d'un patin (50) constitué pour soutenir la machine portative (20) sur une pièce, la fente (73) servant notamment avec la tôle d'étranglement (76) située en face à étrangler le courant d'air.

10. Dispositif de protection selon la revendication 1,
**caractérisé en ce que**
le capot de protection (40) est composé de deux parties mobiles l'une par rapport à l'autre et dont l'une, sous la forme d'un couvercle latéral tournant (64) s'étend totalement à plat sur toute la face frontale de la partie latérale (96) du capot de protection (40) et de la meule (28) qui se trouvent ainsi totalement libérés par le couvercle (64) quand celui-ci bascule.

11. Dispositif de protection selon la revendication 10,
**caractérisé en ce que**
le couvercle tournant (64) peut basculer dans son plan et présente une poignée de basculement (65) actionnable à la main.

12. Dispositif de protection selon la revendication 11,
**caractérisé en ce que**
le couvercle tournant (64) présente des moyens pour verrouiller sa position de fermeture par rapport à la partie latérale (96).

13. Dispositif de protection selon la revendication 12,
**caractérisé en ce que**
le couvercle tournant (64) porte la fenêtre (66) ainsi que la fente (68).

14. Dispositif de protection selon la revendication 1,
**caractérisé en ce que**
le capot de protection (40), sur sa paroi radiale (95), porte une butée de profondeur de coupe (62) qui, au moyen d'une touche de poussée (63) peut être déplacée et bloquée sur une règle de guidage (60), un bras basculant (38, 138) appartenant au dispositif de protection (33) et portant la machine portative (20) venant s'arrêter sur la butée (62).

15. Dispositif de protection selon la revendication 14,
**caractérisé en ce que**
la butée de profondeur de coupe (62) présente un contre-profil latéral (79) denté pour venir en prise dans un contour externe (59) denté en correspondance d'une règle de guidage (60), afin de fixer ainsi des positions de butée différentes.

16. Dispositif de protection selon la revendication 15,
**caractérisé en ce qu'**
une position de profondeur de coupe sélectionnée notamment au moyen de la butée de profondeur de coupe (62), peut être fixée par rotation au moyen d'un bouton (48) servant de poignée de guidage.
